# FASCICULE DE BREVET EUROPEEN

(11) **EP 1 295 540 B1**
(45) Date de publication et mention de la délivrance du brevet: **24.01.2007**
(21) Numéro de dépôt: 02020508.4
(22) Date de dépôt: 13.09.2002
(51) Int. Cl.: A43B 5/04, B29D 31/515

(54) **Chaussure de ski alpin**
Skischuh
Skiboot

(30) Priorité: 21.09.2001 CH 17462001
(43) Date de publication de la demande: 26.03.2003
(73) Titulaire: LANGE INTERNATIONAL S.A., 1700 Fribourg (CH)
(72) Inventeur: Cristoferetti, Roberto, 38010 Mollaro/Trento (IT)
(74) Mandataire: Bugnion Genève

(56) Documents cités:
- WO-A-00/51458
- CH-A- 507 673
- FR-A- 1 547 769

## Description

La présente invention concerne une chaussure de ski alpin comprenant une coque se fermant sur le devant par deux rabats et un collier articulé sur la coque et destiné à entourer la cheville.

Ce type de chaussure est actuellement le plus répandu. La coque est obtenue par injection d'une matière plastique, généralement du polyuréthanne, qui peut être renforcée par une charge.

Sous la marque TRAPPEUR, il a en outre été commercialisé une chaussure de ski alpin dont la coque et le collier sont en polyamide renforcé par des fibres de carbone dans le but de réduire le poids et d'augmenter la robustesse et la résistance à l'usure de la chaussure. Cette chaussure est également fabriquée par injection. La forte fragmentation des fibres de carbone ne permet d'atteindre que partiellement le but visé et ne permet pas de réduire sensiblement l'épaisseur et le poids de la coque de la chaussure.

Le document CH507673 de l'art antérieur décrit une solution dans laquelle une chaussure sans rabat peut comprendre un matériau avec des fibres. L'enseignement de ce document ne permet pas de réaliser une chaussure très rigide avec rabats.

Un autre document FR1547769 de l'art antérieur décrit une chaussure dont la coque est constituée de deux demi-coques ayant chacune un rabat. L'inconvénient de cette solution est son manque de rigidité.

L'invention a pour but d'obtenir une chaussure de ski alpin sensiblement plus légère que les chaussures connues et qui présente une très grande rigidité.

On sait, d'une manière générale, que les matériaux composites à base de fibres minérales ou synthétiques permettent d'obtenir des structures très légères, rigides et résistantes. L'application à une chaussure de ski n'a toutefois pas été envisagée jusqu'ici, pour des raisons à la fois pratiques et technologiques. D'une part, une telle chaussure n'est pas réalisable par injection. D'autre part, la coque doit encore présenter une certaine flexibilité au niveau des rabats pour permettre la fermeture et le serrage de la chaussure.

La chaussure de ski alpin selon l'invention est caractérisée en ce qu'elle est constituée de deux-demi coques en matériau composite à base de fibres soudées bord à bord, chacune de ces demi-coques comportant un rabat, ces rabats étant orientés différemment de manière à venir se superposer après soudage des demi-coques, en ce que l'épaisseur des rabats est inférieure à 1,2 mm et en ce que la coque est en matériau composite à base de tissus de fibres enduits de résine.

Les deux-demi coques sont fabriquées séparément sans avoir recours à l'injection.

Selon l'invention, les demi-coques sont avantageusement fabriquées par la mise en forme, par pression ou dépression, de tissus de fibres imprégnées d'un liant polymérisable, dans des moules. Les deux demi-coques sont ensuite soudées bord à bord ou par chevauchement des deux demi-coques dans un moule et polymérisation dans un autoclave.

L'invention est plus précisément définie par les revendications.

Le collier peut être exécuté en une seule pièce suffisamment mince pour conserver une certaine flexibilité.

On utilise, de préférence, des fibres de KEVLAR (marque déposée) qui assurent une grande rigidité. A ces fibres de KEVLAR, on ajoute généralement des fibres de carbone, notamment pour des raisons esthétiques. Le liant polymérisable est par exemple une résine époxy ou une résine polyester. Il sera également possible d'utiliser des fibres de verre.

Le dessin annexé représente un mode d'exécution de l'invention.

La figure 1 du dessin représente les deux demi-coques A et B avant assemblage.

La figure 2 est une vue en coupe selon II-II de la demi-coque B.

Chacune de ces demi-coques présente un rabat 1, respectivement 2, le rabat 1 étant plus incliné que le rabat 2 relativement au plan du dessin.

Dans l'exemple considéré, les demi-coques sont fabriquées à partir de tissus de fibres de KEVLAR et de fibres de carbone liées par une résine époxy ou une résine polyester. On peut opérer par voie humide, les tissus étant enduits sur place de résine, mais il est préférable d'utiliser des tissus pré-imprégnés de résine prépolymérisée. Les tissus sont placés dans un moule dans lequel il sont mis en forme par dépression ou compression au moyen d'une enveloppe souple ou sac.

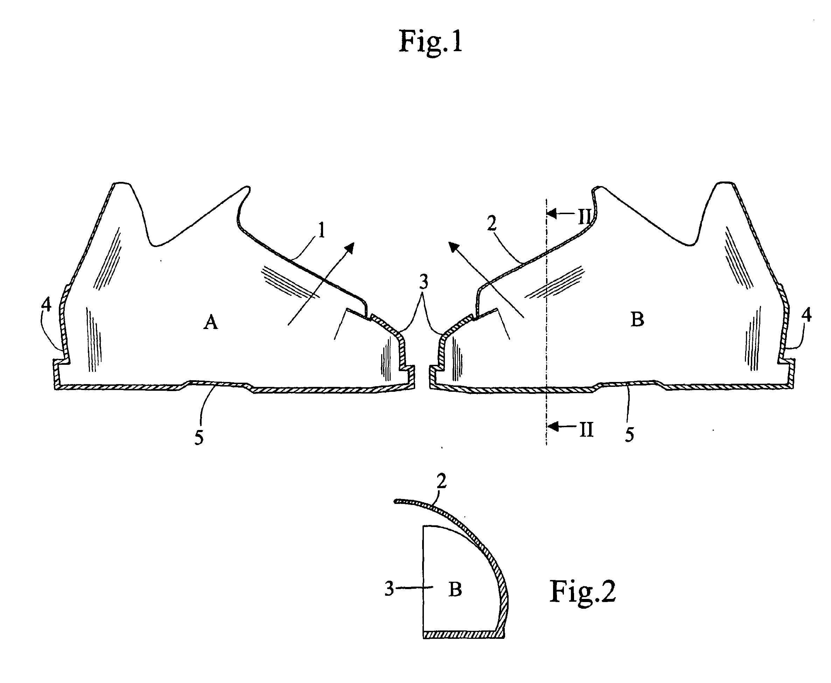

On peut procéder de deux manières. La première consiste à terminer la polymérisation de la résine de chacune des demi-coques par chauffage dans un autoclave, à assembler les demi-coques bord à bord selon un plan de joint correspondant au plan du dessin à l'exception des rabats 1 et 2 qui viennent se chevaucher, puis à recouvrir le joint des demi-coques au moyen d'un ruban de tissu imprégné de résine polymérisable puis à polymériser le ruban, la résine servant de colle aux deux demi-coques. Le collage bord à bord des deux demi-coques n'est fait, bien entendu, que dans les zones plus épaisses représentées à la figure 1, les rabats 1 et 2 étant libres et venant se superposer avec un espace entre eux.

L'autre manière consiste à utiliser, pour chaque demi-coque, une surface de tissu dépassant le plan de joint d'au moins un demi-moule, de telle sorte que lorsqu'on assemble les deux demi-coques dans un moule formé des deux-demi moules, les bords des demi-coques viennent se superposer, la prépolymérisation assurant une tenue suffisante des tissus. On met ensuite les deux demi-coques ainsi assemblées sous pression dans le moule au moyen d'un sac de pression et on polymérise le tout dans un autoclave. Par le fluage de la résine, on obtient ainsi une coque continue, monolithique. Les rabats 1 et 2 dépassent bien entendu le plan de joint du moule de manière à venir se superposer partiellement.

Dans les deux cas, on dispose plusieurs couches de tissu, chaque couche présentant une épaisseur d'environ 0,2 mm. Le nombre de couches diffère d'un endroit à l'autre de la coque de manière à obtenir résistance et rigidité où cela est nécessaire. La plus grande partie de la coque et les rabats 1 et 2 sont constitués de quatre couches et présentent donc une épaisseur d'environ 0,8 mm. Les zones de la pointe 3 et du talon 4 sont constituées de sept couches, tandis que la semelle 5 est constituée de six couches.

Afin de supporter des efforts dans toutes les directions, les fibres du tissu sont croisées à 90°, mais l'orientation des fibres d'une couche relativement aux fibres de la couche voisine est décalée angulairement de 45°.

L'utilisation de fibres de verre, moins résistante que les fibres de KEVLAR et de carbone, exigera une épaisseur supérieure, mais ne dépassant pas 1,2 mm au niveau des rabats.

Dans les chaussures de ski alpin, il est généralement prévu une possibilité de régler l'inclinaison latérale du collier. Dans la chaussure selon l'invention, de manière à pouvoir effectuer ce réglage, on interpose une pièce en matière plastique, par exemple en polyuréthanne, entre la coque et le collier. Cette pièce, généralement dentée, est collée sur le collier.

Le rabat le plus haut, c'est-à-dire le rabat 2 couvrant, peut être soit sur le côté interne de la chaussure, soit sur le côté externe, interne et externe étant compris relativement au pied de l'utilisateur.

## Revendications

1. Chaussure de ski alpin comprenant une coque constituée de deux-demi coques (A, B) comportant un rabat (1, 2), ces rabats étant orientés différemment de manière à venir se superposer après assemblage des demi-coques, la coque se fermant sur le devant par ces deux rabats et comprenant un collier articulé sur la coque et destiné à entourer la cheville, **caractérisée en ce que** la coque est en matériau composite à base de tissus de fibres enduits de résine, et **en ce que** l'épaisseur des rabats est inférieure à 1,2 mm.

2. Chaussure selon la revendication 1, **caractérisée en ce que** les tissus de fibre sont enduits de résine époxy ou de résine polyester.

3. Chaussure selon la revendication 1 ou 2, **caractérisée en ce que** le collier est également en matériau composite à base de fibres.

4. Chaussure selon l'une des revendications 1 à 3, **caractérisée en ce que** le matériau composite est constitué de fibres de KEVLAR et de résine synthétique polymérisable.

5. Chaussure selon la revendication 4, **caractérisée en ce que** le matériau composite comporte en outre des fibres de carbone.

6. Chaussure selon l'une des revendications 1 à 3, **caractérisée en ce que** le matériau composite comprend des fibres de verre.

7. Chaussure selon la revendication 3, **caractérisée en ce qu'**elle comprend au moins une pièce rapportée à l'endroit de l'une des articulations du collier sur la coque.

8. Chaussure selon l'une des revendications 1 à 7, **caractérisée en ce que** le rabat couvrant (2) est sur le côté interne ou sur le côté externe de la coque.

9. Procédé de fabrication d'une chaussure de ski selon la revendication 1, **caractérisé en ce qu'**on fabrique séparément deux demi-coques par la mise en forme de tissus de fibres imprégnées d'un liant polymérisable, dans des moules, qu'on chauffe les moules pour polymériser et qu'on assemble ensuite les demi-coques bord à bord selon un plan de joint, qu'on recouvre le joint d'un ruban de tissu imprégné de résine polymérisable et qu'on chauffe pour polymériser ce ruban.

10. Procédé selon la revendication 9, **caractérisé en ce que** le liant est prépolymérisé avant mise en forme des tissus dans les moules.

11. Procédé de fabrication d'une chaussure de ski selon la revendication 1, **caractérisé en ce qu'**on utilise des tissus de fibres imprégnés d'un liant polymérisable prépolymérisé, qu'on met en forme les demi-coques dans des fiemi-moules, de telle sorte que le tissu dépasse le plan de joint d'au moins un demi-moule, les bords des demi-coques venant se superposer, qu'on assemble les demi-moules selon leur plan de joint, qu'on presse les demi-coques dans le moule et termine la polymérisation.

12. Procédé selon l'une des revendications 9 à 11, **caractérisé en ce qu'**on dispose les tissus en plusieurs couches, le nombre de couches étant plus important dans les régions du talon, de la pointe de la coque et de la semelle.

## Claims

1. Alpine ski boot comprising a shell made up of two half-shells (A, B) comprising a flap (1, 2), these flaps being oriented differently so as to be superposed after assembly of the half-shells, the shell closing over the front by these two flaps and comprising a cuff articulated to the shell and intended to surround the ankle, **characterized in that** the shell is made of a composite material based on resin-coated fibre fabrics, and **in that** the thickness of the flaps is less than 1.2 mm.

2. Boot according to Claim 1, **characterized in that** the fibre fabrics are coated with epoxy resin or with polyester resin.

3. Boot according to Claim 1 or 2, **characterized in that** the cuff is also made of a fibre-based composite material.

4. Boot according to one of Claims 1 to 3, **characterized in that** the composite material is made up of KEVLAR fibres and of a polymerizable synthetic resin.

5. Boot according to Claim 4, **characterized in that** the composite material comprises, in addition, carbon fibres.

6. Boot according to one of Claims 1 to 3, **characterized in that** the composite material comprises glass fibres.

7. Boot according to Claim 3, **characterized in that** it comprises at least one part joined to the location of one of the articulations of the cuff on the shell.

8. Boot according to one of Claims 1 to 7, **characterized in that** the covering flap (2) is on the inner side or on the outer side of the shell.

9. Method of manufacturing a ski boot according to Claim 1, **characterized in that** two half-shells are manufactured separately by forming fabrics of fibres impregnated with a polymerizable binder, in moulds, **in that** the moulds are heated in order to polymerize and **in that** the half-shells are then assembled edge to edge along mating surfaces, **in that** the join is covered with a fabric tape impregnated with polymerizable resin and **in that** heating is carried out to polymerize this tape.

10. Method according to Claim 9, **characterized in that** the binder is prepolymerized before the fabrics are formed in the moulds.

11. Method of manufacturing a ski boot according to Claim 1, **characterized in that** fabrics of fibres impregnated with a prepolymerized polymerizable binder are used, **in that** the half-shells are formed in mould halves, so that the fabric projects over the mating surfaces of at least one mould half, the edges of the half-shells being superposed, **in that** the mould halves are assembled along their mating surfaces, **in that** the half-shells are compressed in the mould and the polymerization is terminated.

12. Method according to one of Claims 9 to 11, **characterized in that** the fabrics are arranged in several layers, the number of layers being greater in the heel, toe of the shell and sole regions.

## Patentansprüche

1. Schischuh mit einer Schale, die aus zwei je eine Klappe (1, 2) aufweisenden Halbschalen (A, B) besteht, wobei diese Klappen derart unterschiedlich ausgerichtet sind, dass sie nach dem Zusammenfügen der Halbschalen übereinander liegen, und wobei sich die Schale vorn mit diesen beiden Klappen schliesst, und mit einer Manschette, die auf der Schale angelenkt und dazu bestimmt ist, das Fussgelenk zu umgeben, **dadurch gekennzeichnet, dass** die Schale aus einem Verbundwerkstoff auf der Basis von mit Harz überzogenen Fasergeweben besteht und dass die Dicke der Klappen kleiner als 1,2 mm ist.

2. Schuh nach Anspruch 2, **dadurch gekennzeichnet, dass** die Fasergewebe mit Epoxid- oder Polyesterharz überzogen sind.

3. Schuh nach Anspruch 1 oder 2, **dadurch gekennzeichnet, dass** die Manschette ebenfalls aus einem Verbundwerkstoff auf Faserbasis besteht.

4. Schuh nach einem der Ansprüche 1 bis 3, **dadurch gekennzeichnet, dass** der Verbundwerkstoff aus KEVLAR-Fasern und polymerisierbarem Kunstharz besteht.

5. Schuh nach Anspruch 4, **dadurch gekennzeichnet, dass** der Verbundwerkstoff ausserdem Kohlenstoff-Fasern enthält.

6. Schuh nach einem der Ansprüche 1 bis 3, **dadurch gekennzeichnet, dass** der Verbundwerkstoff Glasfasern enthält.

7. Schuh nach Anspruch 3, **dadurch gekennzeichnet, dass** er wenigstens ein aufgesetztes Teil am Ort einer der Gelenkstellen aufweist, wo die Manschette auf der Schale angelenkt ist.

8. Schuh nach einem der Ansprüche 1 bis 7, **dadurch gekennzeichnet, dass** sich die abdeckende Klappe (2) auf der Innenseite oder der Aussenseite der Schale befindet.

9. Verfahren zur Herstellung eines Schischuhs nach Anspruch 1, **dadurch gekennzeichnet, dass** getrennt zwei Halbschalen durch Formgebung der mit einem polymerisierbaren Bindemittel imprägnierten Fasergewebe in Formen hergestellt werden, dass die Formen zum Polymerisieren erhitzt werden, dass dann die Halbschalen Rand an Rand längs einer Trennebene zusammengefügt werden, dass die Fuge mit einem Band, das aus einem mit polymerisierbarem Harz imprägnierten Gewebe besteht, bedeckt wird und dass schliesslich zum Polymerisieren dieses Bandes erhitzt wird.

10. Verfahren nach Anspruch 9, **dadurch gekennzeichnet, dass** das Bindemittel vor der Formgebung der Gewebe in den Formen vorpolymerisiert wird.

11. Verfahren zur Herstellung eines Schischuhs nach Anspruch 1, **dadurch gekennzeichnet, dass** mit einem polymerisierbaren vorpolymerisierten Bindemittel imprägnierte Gewebe verwendet werden, dass die Halbschalen in Halbformen so geformt werden, dass das Gewebe die Trennebene wenigstens einer Halbschale überragt, wobei sich die Ränder der Halbschalen überlagern, dass die Halbschalen längs ihrer Trennebene zusammengefügt werden und dass die Halbschalen in die Form gepresst werden und die Polymerisation beendet wird.

12. Verfahren nach einem der Ansprüche 9 bis 11, **dadurch gekennzeichnet, dass** die Gewebe in mehreren Schichten angeordnet werden, wobei die Anzahl der Schichten in den Bereichen der Ferse, der Schalenspitze und der Sohle grösser ist.
